# EUROPEAN PATENT APPLICATION

(11) **EP 1 439 625 A1**
(43) Date of publication of application: **21.07.2004**
(21) Application number: 03016823.1
(22) Date of filing: 23.07.2003
(51) Int. Cl.: H02J 9/00, G03G 15/00

(54) **Off mode for device**

(30) Priority: 15.01.2003 US 345900
(71) Applicant: Hewlett-Packard Development Company, L.P., Houston, TX 77070 (US)
(72) Inventor: Billey, Paul D., Vancouver, WA 98683 (US); Eaton, Bill, Vancouver, WA 98683 (US)
(74) Representative: Schoppe, Fritz, Dipl.-Ing.

(57) **Abstract**

A method of an embodiment of the invention is disclosed that comprises detecting a turn-off event for an device. The device has an on mode, a sleep mode in which the device consumes less power than in the on mode, and an off mode in which the device consumes less power than in the sleep mode. In response to detecting the turn-off event, the method causes the device to enter the turn-off mode, by turning off power to all components of the device except to one or more components thereof that monitor detection of a tum-on event to cause the device to subsequently exit the off mode.

## Description

### BACKGROUND

Many electronic devices, such as computer peripherals like printers, can consume large amounts of power when they are on, even when they are idle and not currently performing functional tasks. For example, when inkjet and laser printers and other types of image-forming devices are on, they may have to consume large amounts of power when idle so that when called upon to print, the printers can quickly begin printing. Other electronic devices, such as other types of computer peripherals and other types of electronic devices, may similarly use large amounts of power when idle.

However, individuals, organizations, and governments have recently begun to question the power consumption used by such devices, especially when they are idle and not otherwise performing functional tasks. Individuals and organizations are looking for greater energy efficiency to lower their electrical bills. Governments are looking for greater energy efficiency so that the need to build more power plants is reduced, and to avoid brownout and blackout scenarios when power plants are operating at peak capacity. This is especially the case in extremely hot weather, when air conditioners may be running constantly, and utilizing more power than they otherwise would.

With sleep mode functionality, electronic devices may enter sleep mode, which is also referred to as stand-by mode, after lying idle for a length of time. The devices still consume power, but less power than when they are fully operational. However, even in sleep mode many electronic devices still consume larger amounts of power than is desired by individuals, organizations, and governments looking to extract even greater energy efficiency. Turning off such devices manually by using the physical controls located on the outside of the electronic devices may in actuality not accomplish lower energy consumption, since many electronic devices still remain in sleep mode, or in a normal on mode, when users actuate such controls.

Such electronic devices may of course be externally turned off physically, by pulling the plugs that connect them directly to power outlets, by turning off surge protectors, power strips, or uninterruptible power supplies (UPS's) that indirectly connect the devices to such outlets, and so on. While this solution may be practical for individual users having small numbers of electronic devices, it is nevertheless inconvenient. For even small organizations that may have larger numbers of electronic devices, however, physically turning off external power to the devices is at best impractical. Employees would have to turn off all devices before they go home for the day, and first thing the next morning have to turn all the devices back on, which is time-consuming.

### SUMMARY OF THE INVENTION

A method of an embodiment of the invention comprises detecting a turn-off event for an electronic device. The electronic device has an on mode, a sleep mode in which the device consumes less power than in the on mode, and an off mode in which the device consumes less power than in the sleep mode. In response to detecting the turn -off event, the method causes the electronic device to enter the turn-off mode, by turning off power to all components of the device except to one or more components thereof that monitor detection of a turn-on event to cause the device to subsequently exit the off mode.

### BRIEF DESCRIPTION OF THE DRAWINGS

The drawings referenced herein form a part of the specification. Features shown in the drawing are meant as illu strative of only some embodiments of the invention, and not of all embodiments of the invention, unless otherwise explicitly indicated.
FIG. 1 is a state diagram of the on mode, sleep mode, and off mode of an electronic device, according to an embodiment of the invention.
FIG. 2 is a block diagram of an electronic device, according to an embodiment of the invention.
FIG. 3 is simplified diagram of a circuit of an electronic device to cause the device to enter and exit off mode, according to an embodiment of the invention.
FIG. 4 is a flowchart of a method, according to an embodiment of the invention.

### DETAILED DESCRIPTION OF THE DRAWINGS

In the following detailed description of exemplary embodiments of the invention, reference is made to the accompanying drawings that form a part hereof, and in which is shown by way of illustration specific exemplary embodiments in which the invention may be practiced. These embodiments are described in sufficient detail to enable those skilled in the art to practice the invention. Other embodiments may be utilized, and logical, mechanical, and other changes may be made without departing from the spirit or scope of the present invention. The following detailed description is, therefore, not to be taken in a limiting sense, and the scope of the present invention is defined only by the appended claims.

### On Mode, Sleep Mode, and Off Mode for Electronic Device

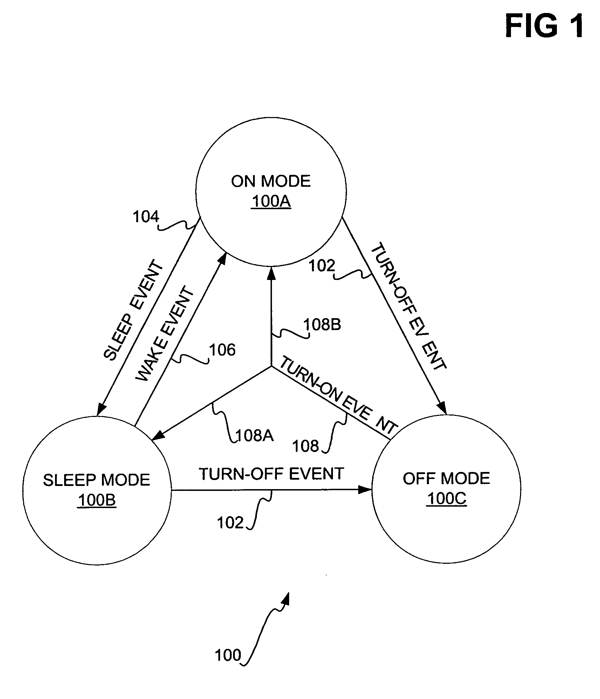

FIG. 1 shows a state diagram of three modes 100 in which an electronic device can operate, according to an embodiment of the invention. The three modes 100 include an on mode 100A, a sleep mode 100B, and an off mode 100C. In the on mode 100A, the electronic device consumes the most power, and is fully operational. In the sleep mode 100B, the electronic device consumes less power than in the on mode 100A, but is less than fully operational. Finally, in the off mode 100C, the electronic device consumes less power than in the sleep mode 100B, but is minimally operational.

In the on mode 100A, the electronic device is able to perform the functional tasks for which it is designed. For example, a printer or other image-forming device in the on mode 100A is able to print onto media, whereas a monitor or other display device in the on mode 100A is able to display image data, and so on. As such, the electronic device consumes the most power when operating in the on mode 100A.

In the sleep mode 100B, the electronic device is able to perform a limited number of functional tasks, and preferably not the tasks for which the device is designed. For example, a printer or other image-forming device in the sleep mode 100B may not be able to print onto media, but may still be able to receive communication from other devices, such as print jobs from host devices like computers, to wake the printer and cause it to exit the sleep mode 100B. As another example, a monitor or other display device in the sleep mode 100B may not be able to display image data, but may still be able to receive such image data from other devices, to wake the monitor and cause it to exit the sleep mode 100B. The electronic device consumes less power when operating in the sleep mode 100B, because some of its components are turned off to conserve power.

In the off mode 100C, the electronic device is preferably able only to exit the off mode 100C, and not otherwise perform functional tasks. For example, a printer or other image-forming device in the off mode 100C may not be able to receive communication from other devices, such that the other devices sending such communication does not cause the printer to exit the off mode 100C. Similarly, a monitor or other display device in the off mode 100C may not be able to receive image data from other devices, such that the other devices sending such image data does not cause the monitor to exit the off mode 100C. The electronic device consumes the least power when operating in the off mode 100C. Preferably, all of the components of the device are turned off in the off mode 100C, except those needed to cause the device to exit the off mode 100C.

As depicted in FIG. 1, various events cause the electronic device to switch operation from one of the states 100 to other of the states 100. From either the on mode 100A or the sleep mode 100B, a turn-off event 102 causes the electronic device to enter the off mode 100C. The turn-off event 102 may be a user-initiated turn-off action relative to a physical control of the electronic device. For instance, the user may actuate a button on the electronic device. The turn-off event 102 may also be a turn-off command received by the electronic device, such as a turn -off command received from firmware of the device. The turn -off event 102 may be another type of event as well.

The electronic device may exit the off mode 100C in response to a turn-on event 108. Specifically, the turn-on event 108 may cause the device in one embodiment to enter the sleep mode 100B, as indicated by the arrow 108A, and may cause the device in another embodiment to enter the on mode 100A, as indicated by the arrow 108B. Like the turn-off event 102, the turn-on event 108 may be a user-initiated action relative to a physical control of the electronic device, such as the user again actuating a button on the device. The turn-on event 108 may also be a turn-on command internally received from within the electronic device, such as a turn-off command internally received from firmware of the device that remains on while in the off mode 100C. The turn-on event 108 may be another type of event as well.

From the on mode 100A, the electronic device may also enter the sleep mode 100B in response to a sleep event 104. The sleep event 104 may be the passage of a certain length of time, or another type of event. From the sleep mode 100B, the electronic device may exit the sleep mode 100B and enter the on mode 100A in response to a wake event 106. The wake event 106 may be communication received from another device, such that the device exits the sleep mode 100B and enters the on mode 100A to act on the communication, or it may be another type of event. For example, in the case of a printer, receiving a print job from a host device may cause the printer to exit the sleep mode 100B and enter the on mode 100A to output the print job. As another example, in the case of a monitor, receiving image data from a host device may cause the monitor to exit the sleep mode 100B and enter the on mode 100A to display the image data.

### Electronic Device

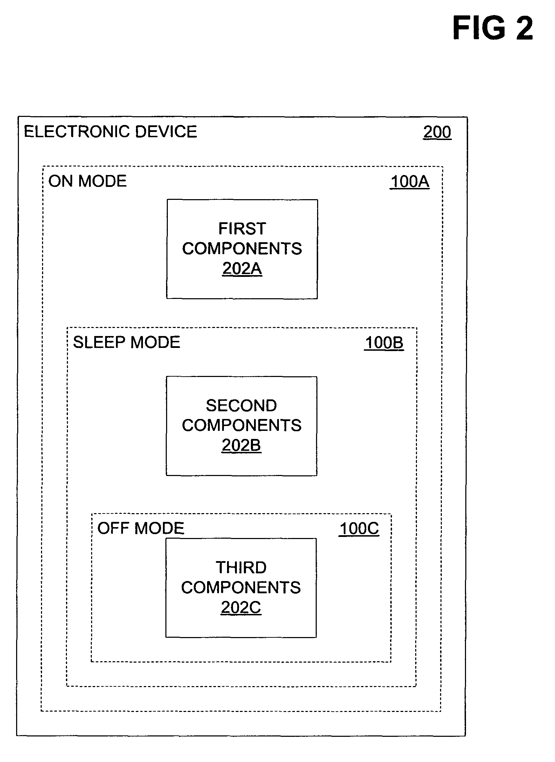

FIG. 2 shows an electronic device 200, according to an embodiment of the invention. The electronic device 200 may be a computing device, an image-forming device, a display device, or another type of computer peripheral or electronic device. For example, the computing device may be a laptop or desktop computer, whereas the image-forming device may be a laser or an inkjet printer. The display device may be a cathode-ray tube (CRT) monitor, a flat-panel display (FPD), or another type of display device.

The electronic device 200 includes a number of components 202, which are divided into first components 202A, second components 202B, and third components 202C. As indicated in FIG. 2, the first components 202A are turned on only when the electronic device 200 is operating in the on mode 100A, whereas the second components 202B are turned on when the device 200 is operating in either the on mode 100A or the sleep mode 100B. The third components 202C are turned on all the time, regardless of whether the device 200 is operating in the on mode 100A, the sleep mode 100B, or the off mode 100C. As can be appreciated by those of ordinary skill in the art, some of the components may be shared among the first components 202A, the second components 202B, and the third components 202C, although this is not indicated in FIG. 2.

The first components 2 02A are those components that need to be on when the device is fully operational, and that are otherwise turned off. The first components 202A typically include the components that consume the most power within the electronic device 200. In the case of an image-forming device, the first components 202A may include the actual image-forming components, like inkjet-printing mechanisms, laser-printing mechanisms, and so on. In the case of a display device, the first components 202A may include the actual display components, like the CRT in a CRT monitor, the flat panel in an FPD, and so on.

The second components 202B are those components that switch the electronic device 200 from and to operating in the sleep mode 100B, in which the device 200 consumes lesspower than in the on mode 100A because the first components 202A are turned off in the sleep mode 100B. The second components 202B may include components that are able to turn off power to the first components 202A, so that the first components 202A can be turned off when the device 200 enters the sleep mode 100B. The second components 202B may also includes components that are able to detect wake events so that the device 200 may exit the sleep mode 100B and enter the on mode 100A to act on the receivedevents. For instance, the second components 202B may include communications components that listen for communication from other devices, such as image data in the case of the device 200 being a display device, image-forming data in the case of the device 200 being an image-forming device, and so on. The second components 202B may include or be hardware, software, or a combination of hardware and software.

The third components 202C are those components that switch the electronic device 200 from and to operating in the off mode 100C, in which the device 200 consumes less power than in the on mode 100A or in the sleep mode 100B because the first components 202A and the second components 202B are turned off in the off mode 100C. Preferably, the third compone nts 202C include only those components necessary to switch the electronic device 200 from and to operating in the off mode 100C. The third components 202C may include components that are able to turn off power to the second components 202B. In one embodiment, the third components 202C include components that are able to turn off power to the first components 202A. In another embodiment the third components 202C first requests that the second components 202B turn off the first components 202A, by entering the sleep mode 100B, before turning off the second components 202B and entering the off mode 100C.

The third components 202C can include components that are able to detect events so that the electronic device 200 may exit the off mode 100C and enter the on mode 100A or the sleep mode 100B. However, preferably the electronic device 200 is unable to receive communication from other devices when in the off mode 100C, such that the third components 202C do not include components that monitor communication from other devices. For example, the third components 202C may include a physical control, user actuation of which causes the electronic device 200 to exit the off mode 100C if it is currently operating in the off mode 100C, and enter the off mode 100C if it is currently not operating in the off mode 100C. Such user actuation of the physical control is considered a user-initiated event that is effectively detected by the third components 202C. Most generally, the third components 202c may include or be hardware, software, or a combination of hardware and software.

The third components 202C may also include circuitry to switch the electronic device 200 from operating in either the sleep mode 100B or the on mode 100A to the off mode 100C, and vice-versa, depending on the mode in which the device 200 is currently operated, in response to a condition being satisfied. Satisfaction of a condition is another type of event detected by the third components 202C. For instance, the circuitry may cause the device 200 to enter the off mode 100C at a predetermined time, and then cause the device 200 to exit the off mode 100C at another predetermined time. In such an example, the physical control of the third components 202C may also be utilized to have the electronic d evice 200 prematurely enter or exit the off mode 100C. The circuitry may include one or more electrical circuits, such as one or more integrated circuits (IC's), and so on.

### Electrical Circuit

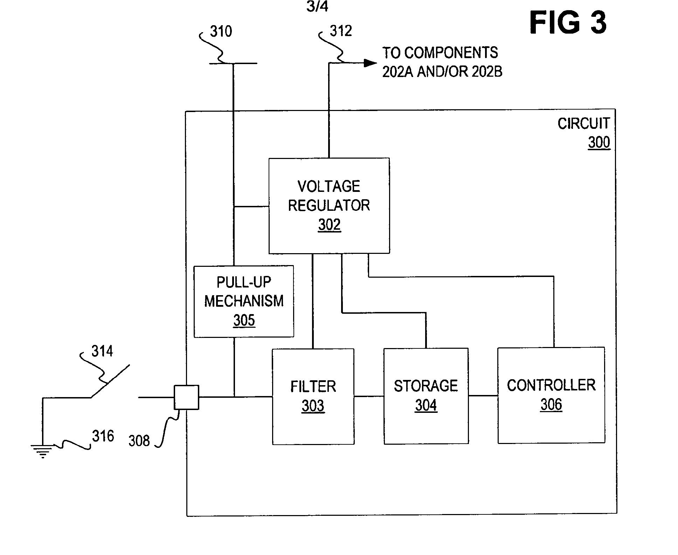

FIG. 3 shows an electrical circuit 300, according to an embodiment of the invention, which can act as some or all of the third components 202C of the electronic device 200 of FIG. 2. The electrical circuit 300 may be implemented as an integrated circuit (IC), such as an application-specific IC (ASIC). The circuit 300 includes a voltage regulator 302, a storage 304, a controller 306, and an input 308. The circuit 300 further includes a filter 303 and a pull-up mechanism 305. The circuit 300 may also include other components besides those depicted in FIG. 3, as can be appreciated by those of ordinary skill within the art. The filter 303, the storage 304, and the controller 306 are powered by the voltage regulator 302 in one embodiment.

The voltage regulator 302 of the circuit 300 receives power from an external voltage source 310 at a given voltage level, and regulates it to another voltage level to provide to the first components 202A and/or the second components 202B of FIG. 2, as indicated by the arrow 312. For example, in one embodiment, the voltage source 310 provides power at a voltage of 32 volts (V), which the voltage regulator 302 regulates down to a voltage of 3.3 V to provide power to the components 202A and/or 202B. The voltage regulator 302 may itself be one or more electrical circuits.

The input 308 may in one embodiment be a pin of an IC. An external physical control 314 is connected between the input 308 and the ground 316. The external physical control 314 may be a normally open switch, such as a button, that a user is able to actuate. In response to actuation of the physical control 314, the storage 304 is momentarily pulled to the ground 316, whereas normally it is at the voltage level provided by the voltage source 310, through the pull-up mechanism 305. The pull-up mechanism may be a current source or another type of mechanism, and ensures that when the physical control 304 is actuated, that the voltage source 310 is not shorted to the ground 316, and that input 308 is not shorted to the voltage regulator 302.

The storage 304 stores a flag that indicates whether the electrical circuit 300 is in a first state or a second state. In response to the actuation of the physical control 314, the input 308 is effectively asserted, such that the flag stored by the storage 304 switches from the first state to the second state, or vice-versa. The storage 304 may in one embodiment include a one-bit storage, such as a flip-flop, a latch, a solid-state memory, and/or another type of electrical component. The storage 304 is coupled to the input 308 through the filter 303. The filter 303 effectively de-glitches the signal provided from the input 308 before it reaches the storage 304.

The controller 306 monitors the flag stored by the storage 304, and turns the voltage regulator 302 on when the flag is in the first state, and off when the flag is in the second state. The controller 306 can include logic-implementing hardware in one embodiment to perform this functionality, such as firmware. The controller 306 turns on power to the first components 202A and/or the second components 202B when the flag is in the first state, by turning on the voltage regulator 302 so that it is able to provide power to these components. The controller 306 likewise turns off power to the first components 202A and/or the second components 202B when the flag is in the second state, by turning off the voltage regulator 302 so that it is unable to provide power to these components. In one embodiment, the controller 306 exclusively controls entry of the electronic device 200 into the off mode 100C.

The flag stored by the storage 304 corresponds to whether the electronic device 200 of FIG. 2, of which the electrical circuit 300 is a part as one or more of the third components 202C, is in the off mode 100C. When the flag is in the first state, the device 200 is not in the off mode 100C, whereas when the flag is in the second state, the device 200 is in the off mode 100C. Therefore, the controller 306 causes the electronic device 200 to consume less power, by causing it to enter the off mode 100C, or more power, by causing it to exit the off mode 100C.

### Method

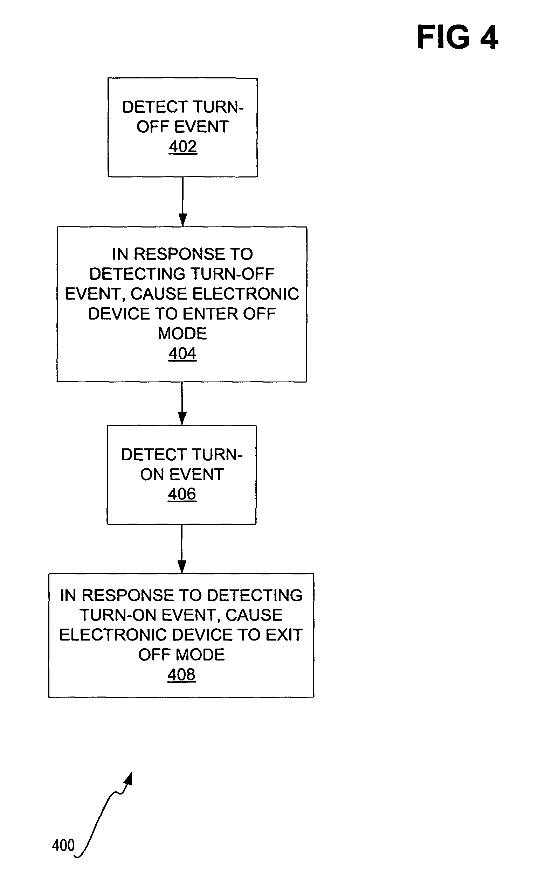

FIG. 4 shows a method 400, according to an embodiment of the invention. The method 400 may be implemented as computer-executable instructions stored on a computer-readable medium. For instance, the instructions may include microcode that is executable by the controller 306 of the electrical circuit 300 of FIG. 3. The computer-readable medium may be solid-state memory, such as firmware, in such an example. The method 400 is for causing the electronic device 200 of FIG. 2 to enter and exit the off mode 100C, as has been described. The method 400 may be performed by the electrical circuit 300, or more generally by one or more of the third components 202C of FIG. 2.

A tum-off event is detected (402). The turn-off event may include a user-initiated turn -off action, such as a user physically actuating a physical control of the electronic device 200. The turn-off event may also include satisfaction of a condition, such as a system clock indicating that the current time is equal to a predetermined time. The turn -off event may include receipt of a turn-off command from firmware of the electronic device 200. The turn-off event may also include another type of event.

In response to detection of the turn -off event, the electronic device 200 is caused to enter the off mode 100C (404). Power to the components 202A and 202B of the electronic device 200 is turned off. That is, power to all the components of the electronic device 200, except to the one or more components that are responsible for causing the electronic device 200 to exit and enter the off mode 100C, is turned off. Most generally, power to all the components of the device 200, except to one or more components that monitor detection of a turn-on event to cause the device to subsequently exit the off mode 100C, is turned off.

A turn-on event is then detected (406). The turn-on event may also include a user-initiated turn-on action corresponding to the user-initiated tum-off action, such as the user again physically actuating the physical control of the device 200. The turn -on event may also include satisfaction of a condition, such as the system clock indicating that the current time is equal to another predetermined time. The turn-on event may include the receipt of a turn-on command from the firmware of the electronic device 200, where the firmware is one of the third components 202C that remain on even when the device 200 has entered the off mode 100C. Preferably, the turn-on event does not include communication from a device other than the device 200, such that communication from another device does not cause the device 200 to exit the off mode 100C.

In response to detection of the turn -on event, the electronic device 200 is caused to exit the off mode 100C (408). Power to the first components 202A and/or the second components 202B of the electronic device 200 is turned on. That is, power to at least some, and potentially all, of the components that was previously turned off is turned on. In one embodiment, power to all the components 202A and 202B is turned back on, such that the device 200 enters the on mode 100A upon exiting the off mode 100C. In another embodiment, power to only the components 202B is turned back on, such that the device 200 enters the sleep mode 100B upon exiting the off mode 100C. In this latter embodiment, power is not turned back on to the components 202A.

### Conclusion

It is noted that, although specific embodiments have been illustrated and described herein, it will be appreciated by those of ordinary skill in the art that any arrangement calculated to achieve the same purpose may be substituted for the specific embodiments shown. This application is intended to cover any adaptations or variations of the disclosed embodiments of the present invention. Therefore, it is manifestly intended that this invention be limited only by the claims and equivalents thereof.

## Claims

1. A method comprising:
detecting a turn-off event for a device having an on mode, a sleep mode in which the device consumes less power than in the on mode, and an off mode in which the device consumes less power than in the sleep mode; and,
in response to detecting the turn-off event, causing the device to enter the off mode by turning off power to all components of the device except to one or more of the components thereof that monitor detection of a turn-on event to cause the device to subsequently exit the off mode.

2. The method of claim 1, further comprising:
detecting the turn-on event by the device; and,
in response to detecting the turn-on event, causing the device to exit the off mode by turning on power to at least some of the components of the device that were previously turned off when the device entered the off mode.

3. The method of claim 2, wherein turning on power to at least some of the components of the device that were previously turned off comprises turning on power to all of the components of the device so that the device enters the on mode.

4. The method of claim 2, wherein turning on power to at least some of the components of the device that were previously turned off comprises turning on power to some of the components of the device so that the device enters the sleep mode.

5. The method of claim 1, wherein detecting the turn-off event by the device comprises receiving a turn-off command from firmware of the device.

6. The method of claim 1, wherein detecting the turn-off event by the device comprises detecting a user-initiated turn-off action relative to a physical control of the device.

7. A computer-readable medium having computer-executable instructions stored thereon to perform a method comprising:
detecting a turn-off event by an device; and,
in response to detecting the turn-off event, turning off power to all components of the electronic device except to one or more components thereof that monitor detection of a turn-on event to cause the device to subsequently turn on,
the turn-on event uninclusive of communication from another device.

8. The computer-readable medium of claim 7, the method further comprising:
detecting the turn-on event by the device; and,
in response to detecting the turn-on event, turning on the power to at least some of the components of the device that were previously turned off.

9. The computer-readable medium of claim 7, wherein detecting the turn-off event by the device comprises receiving a turn-off command from firmware of the device.

10. The computer-readable medium of claim 7, wherein detecting the turn-off event by the device comprises detecting a user-initiated turn-off action relative to a physical control of the device.
